# EUROPEAN PATENT SPECIFICATION

(11) **EP 3 457 316 B1**
(45) Date of publication and mention of the grant of the patent: **02.08.2023**
(21) Application number: 17840847.2
(22) Date of filing: 19.06.2017
(51) Int. Cl.: G06V 40/13, H04M 1/02, G06F 1/16

(54) **FINGERPRINT MODULE AND MOBILE TERMINAL HAVING SAME**
FINGERABDRUCKMODUL UND MOBILES ENDGERÄT DAMIT
MODULE D'EMPREINTE DIGITALE ET TERMINAL MOBILE LE COMPRENANT

(30) Priority: 16.08.2016 CN 201610677965; 16.08.2016 CN 201620890780 U
(43) Date of publication of application: 20.03.2019
(73) Proprietor: GUANGDONG OPPO MOBILE TELECOMMUNICATIONS CORP., LTD., Wusha, Chang'an Dongguan, Guangdong 523860 (CN)
(72) Inventor: YU, Weibin, Dongguan Guangdong 523860 (CN); HUANG, Maozhao, Dongguan Guangdong 523860 (CN); YANG, Mao, Dongguan Guangdong 523860 (CN)
(74) Representative: Manitz Finsterwald Patent- und Rechtsanwaltspartnerschaft mbB
(86) International application number: PCT/CN2017/088948
(87) International publication number: WO 2018/032871

(56) References cited:
- WO-A1-2015/085786
- CN-A- 101 382 994
- CN-A- 103 942 538
- CN-A- 105 373 778
- CN-A- 105 373 778
- CN-A- 106 203 403
- CN-A- 106 203 403
- CN-U- 205 334 502
- CN-U- 206 178 866
- CN-U- 206 178 866
- US-A1- 2008 267 462
- US-A1- 2011 162 879
- US-A1- 2014 126 127
- US-A1- 2015 189 204

## Description

### TECHNICAL FIELD

The described embodiments relate to electronic device and in particular to a fingerprint module and a mobile terminal thereof.

### BACKGROUND

In the related art, the decoration ring of the fingerprint module of the mobile terminal is a metal piece, the static electricity is generated when human hands touch the decoration ring, or the decoration ring is in the friction process, and the generated static electricity has a bad influence on the fingerprint module. A fingerprint module is disclosed in CN105373778A (MEIZU SCIENCE & TECH CO LTD) 2 March 2016 (2016-03-02).

### SUMMARY OF THE DISCLOSURE

The present invention aims to solve one of the technical problems in the relevant technology at least to some degree. Thus, the present invention provides a fingerprint module, which has the advantage of anti-static.

The present invention further provides a mobile terminal, which includes the above fingerprint module.

According to the present invention, the fingerprint module is defined according to claim 1.

According to an embodiment of the present invention, the mobile terminal includes the above fingerprint module.

### BRIEF DESCRIPTION OF THE DRAWINGS

FIG. 1 is a structural schematic view of the fingerprint module according to the embodiment of the present invention .
FIG. 2 is an exploded schematic view of the fingerprint module according to the embodiment of the present invention .
FIG. 3 is another exploded schematic view of the fingerprint module according to the embodiment of the present invention.
FIG. 4 is a cross-sectional schematic view of the fingerprint module according to the embodiment of the present invention .

List of reference numbers in drawings:
fingerprint module 100,
encapsulation layer 1, protruding portion 11,
decorative part 2, embedding groove 21, recess portion 22, through hole 23, mounting slot 24, sealing groove 25,
circuit board component 3, flexible circuit board 31, reinforcing plate 32,
conductive element 4, cover plate 5, fingerprint pressing plate 6, sealing member 7.

### DETAILED DESCRIPTION

Embodiments of the present invention will be described in detail below, and examples of the embodiments will be illustrated in the accompanying drawings. The embodiments described below with reference to the drawings are illustrative and are intended to explain the present invention, and cannot be construed as a limitation to the present invention.

In the specification of the present disclosure, it is to be understood that terms such as "thickness", "upper", "lower", "front", "rear", "left", "right", "vertical", "horizontal", "top", "bottom", "inner", "outer" and "circumference" refer to the orientations and locational relations illustrated in the drawings, and for describing the present disclosure and for describing in a simple manner, and which are not intended to indicate or imply that the device or the elements are disposed to locate at the specific directions or are structured and performed in the specific directions, which could not to be understood as limiting the present disclosure.

In addition, terms such as "first" and "second" are used herein for purposes of description and are not intended to indicate or imply relative importance or significance or to imply the number of indicated technical features. Thus, the feature defined with "first" and "second" may include one or more of such a feature. In the description of the present disclosure, "a plurality of" means two or more than two, unless otherwise specifically defined.

In the present disclosure, unless specified or limited otherwise, terms "mounted", "connected", "coupled" and the like are used in a broad sense, and may include, for example, fixed connections, detachable connections, or integral connections; may also be mechanical or electrical connections; may also be direct connections or indirect connections via intervening structures; may also be inner communications of two elements, as can be understood by those skilled in the art depending on specific contexts.

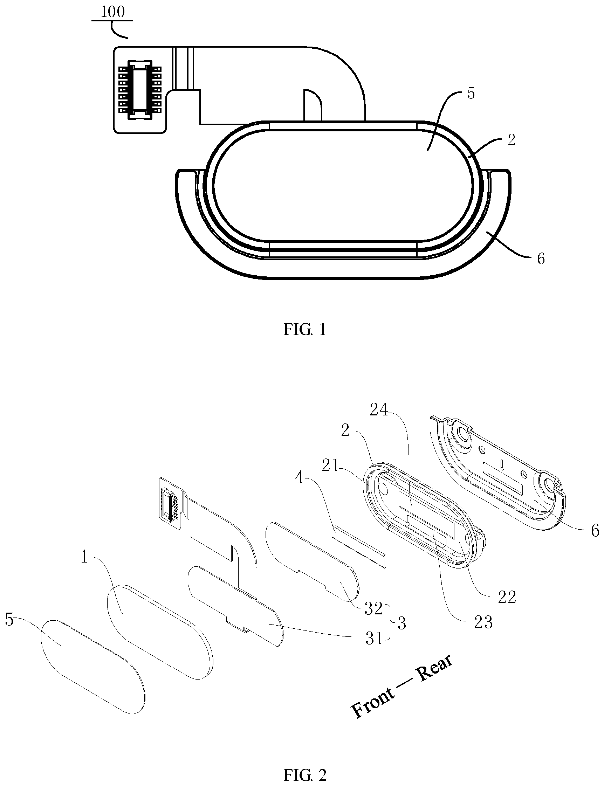

In the following, a fingerprint module 100 provided in embodiments of the present invention will be described according to FIGS. 1-4.

Referring to FIGS. 1-4, the fingerprint module 100 according to the embodiment of the present invention includes : a fingerprint recognition component, a decorative part 2, a circuit board component 3 and a conductive element 4.

Specifically, a front side of the decorative part 2 includes an embedding groove 21, the fingerprint recognition component is embedded in the embedding groove 21, which makes the appearance of the fingerprint recognition component more beautiful. An end of the circuit board component 3 extends into the embedding groove 21, and the end of the circuit board component 3 is attached to a rear end face of the fingerprint recognition component to ensure a tight connection between the fingerprint recognition component and the circuit board component 3. The circuit board component 3 includes a ground terminal, and the conductive element 4 is interposed between the end of the circuit board component 3 and an bottom wall of the embedding groove 21 to electrically connect the decorative part 2 to the ground terminal through the circuit board component 3. The purpose of grounding the decorative part 2 could be achieved when the decorative part 2 electrically connects to the ground terminal through the circuit board component 3. Therefore, the static electricity could be avoided to avoid the bad influence on the fingerprint module 100, the reliability of the operation of the fingerprint module 100 could be ensured.

In the fingerprint module 100 according to the embodiment of the present invention, the purpose of grounding the decorative part 2 could be achieved by extending the end of the circuit board component 3 into the embedding groove 21, disposing the ground terminal on the circuit board component 3, and interposing the conductive element 4 between the end of the circuit board component 3 and the bottom wall of the embedding groove 21 to electrically connect the decorative part 2 to the ground terminal through the circuit board component. Therefore, the static electricity could be avoided to avoid the bad influence on the fingerprint module, the reliability of the operation of the fingerprint module could be ensured.

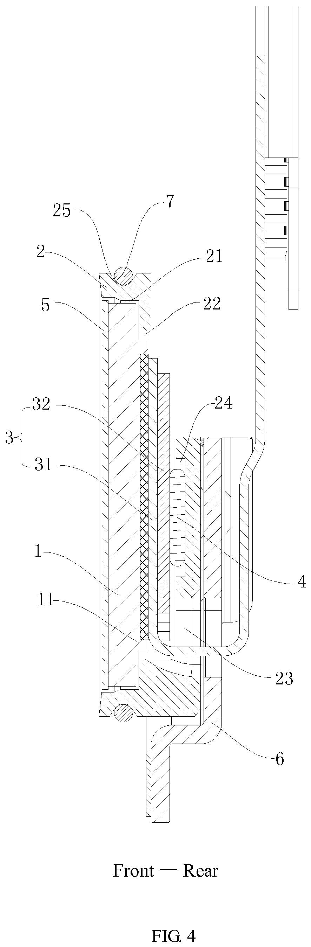

In embodiments of the present invention, as shown in FIGS. 2 and 4, the bottom wall of the embedding groove 21 includes a mounting slot 24, and the conductive element 4 is embedded in the mounting slot 24. The mounting slot 24 could limit the conductive element 4 to prevent the conductive element 4 from moving on the bottom wall of the embedding groove 21, thereby ensuring the reliability of connection between the conductive element 4 and the bottom wall of the embedding groove 21 and between the conductive element 4 and the circuit board component 3.

In the present invention, the conductive element 4 is a conductive foam. The conductive foam is a conductive cloth wrapped on a flame-retardant sponge. After a series of treatments, it has good face conductivity and can be easily fixed on the shielding device with an adhesive tape. The use of conductive foam is low in cost, simple in processing, and can ensure the reliability of grounding. When the circuit board component 3 is assembled with the decorative part 2, the conductive foam between the circuit board component 3 and the decorative part 2 has a certain amount of compression to ensure the reliability of connection between the conductive foam and the decorative part 2, thereby ensuring good grounding of the decorative part 2 and preventing the static electricity of the decorative part 2 from adversely affecting the fingerprint module 100.

In the present invention, as shown in FIGS. 2 and 4, the circuit board component 3 includes : a flexible circuit board 31 and a reinforcing plate 32. An end of the flexible circuit board 31 may extend into the embedding groove 21, and the end of the flexible circuit board 31 may be attached to the rear end face of the fingerprint recognition component (As the rear end shown in FIG. 4). Therefore, the tight connection between the fingerprint recognition component and the flexible circuit board 31 can be ensured, and the reliability of the operation of the fingerprint module 100 can be ensured. The ground terminal is disposed on the flexible circuit board 31, the reinforcing plate 32 is attached to the flexible circuit board 31 and electrically connected to the flexible circuit board 31, and the reinforcing plate 32 is located at a side of the flexible circuit board 31 away from the fingerprint recognition component, and the conductive element 4 is electrically connected to the reinforcing plate 32 (i.e., the reinforcing plate 32 is a conductive member). The reinforcing plate 32 can enhance the structural strength of the flexible circuit board 31, prevent the flexible circuit board 31 from being bent, and the like, thereby ensuring the reliability of the flexible circuit board 31. At the same time, the reinforcing plate 32 and the flexible circuit board 31 can be electrically connected, and the conductive element 4 and the reinforcing plate 32 are electrically connected to realize the electrical connection between the decorative part 2 and the ground terminal through the flexible circuit board 31, so that the effect of grounding the decorative part 2 could be achieved to avoid the adverse effect of the static electricity of the decorative part 2 on the fingerprint module 100.

In some embodiments of the present invention, as shown in FIG. 4, an outer peripheral wall of the decorative part 2 may be covered with a sealing member 7. When the fingerprint module 100 may be mounted on a mobile terminal such as a mobile phone, it could prevent the sweat or other liquid on the hand from intruding into the interior of the mobile terminal and damaging the components inside the mobile terminal, thereby ensuring the reliability of the operation of the mobile terminal.

Furthermore, as shown in FIG. 4, the outer peripheral wall of the decorative part 2 may include a sealing groove 25, and the sealing member 7 may be embedded in the sealing groove 25. Therefore, the sealing member 7 can be prevented from being tilted in the axial direction of the decorative part 2 (front-rear direction as shown in FIG. 4) to ensure the reliability of the sealing.

In some embodiments of the present invention, as shown in FIGS. 2 and 4, the fingerprint module 100 further may include a cover plate 5, the cover plate 5 may be embedded in embedding groove and located at a front side of the fingerprint recognition component (the front side as shown in FIG. 4). On the one hand, the cover plate 5 can further protect the fingerprint recognition component and the circuit board component 3, and on the other hand, the cover plate 5 can also increase the aesthetics of the fingerprint module 100.

In some embodiments, the cover plate 5 may be a glass cover plate or a ceramic cover plate, the glass cover plate or the ceramic cover plate has high gloss, which can improve the aesthetics of the fingerprint module 100.

In some embodiments of the present disclosure, the fingerprint recognition component includes an encapsulation layer 1, a rear wall face of the encapsulation layer 1 (the rear side as shown in FIG. 4) may have a first mating portion, the decorative part 2 may have the embedding groove 21, the encapsulation layer 1 may be embedded in the embedding groove 21, and the embedding groove 21 may be provided with a second a mating portion, the first mating portion may be embedded in the second mating portion, such that the first mating portion and the second mating portion can be fitted to each other. Therefore, when the encapsulation layer 1 may be embedded in the embedding groove 21, and the first mating portion and the second mating portion may be fitted to each other, the thickness along the front-rear direction of the encapsulation layer 1 and the decorative part 2 can be reduced (the front-rear direction as shown in FIG. 4), so that the thickness of the fingerprint module 100 can be reduced, and the ultra-thin design of the mobile terminal can be adapted to meet the user's use requirements.

As shown in FIGS. 2-4, the first mating portion is a protruding portion 11 formed on the rear wall face of the encapsulation layer 1 (the rear side as shown in FIG. 4), and the second mating portion may be a recess portion 22 formed in the embedding groove 21, at least a portion of the protruding portion 11 may be located in the recess portion 22. Therefore, when the encapsulation layer 1 and the decorative part 2 may be assembled, at least a portion of the protruding portion 11 may be embedded in the recess portion 22, and the thickness of the decorative part 2 and the encapsulation layer 1 in the front-rear direction can be reduced, thereby reducing the thickness of the fingerprint module 100 can be adapted to the ultra-thin design of the mobile terminal to meet the user's use requirements.

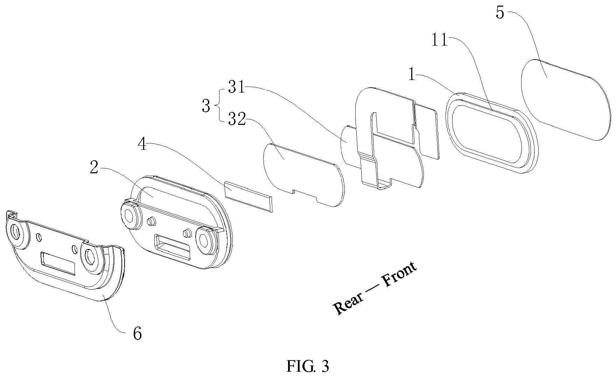

For an example, as the embodiment shown in FIGS. 3 and 4, the rear wall face of the encapsulation layer 1 may have a first mating portion, the first mating portion may be formed as a protruding portion 11, the decorative part 2 may have an embedding groove 21, the encapsulation layer 1 may be disposed in the embedding groove 21, and the bottom wall of the embedding groove 21 provided with the second mating portion which may be formed as a recess portion 22, and the protruding portion 11 may be located in the recess portion 22. The side wall face of the protruding portion 11 and the rear wall face of the encapsulation layer 1 may form a first stepped face, and the bottom wall of the embedding groove 21 and the side wall of the recess portion 22 form a second stepped face, and the first stepped face and the second stepped face may be engaged. Thus, the displacement of the encapsulation layer 1 in the rear direction could be limited, thereby ensuring the reliability of the operation of the fingerprint module 100. And when the thickness of the protruding portion 11 in the front-rear direction is a, the overall thickness of the fingerprint module 100 can be reduced by a.

In some embodiments, as shown in FIG. 3, the number of the protruding portion 11 may be one. Thereby, the structure and processing technology of the encapsulation layer 1 can be simplified, the production cycle can be saved, and the production cost can be reduced. For example, in the embodiment shown in FIG. 3, the rear wall face of the encapsulation layer 1 may be provided with a protruding portion 11, the number of the protruding portion 11 may be one and located at the center of the encapsulation layer 1. When the encapsulation layer 1 is processed, the encapsulation layer 1 having the same thickness can be processed first, and then a step is processed in the circumferential direction of the rear wall face of the encapsulation layer 1.

The fingerprint module 100 in accordance with one embodiment of the present invention is described below with reference to FIGS. 1-4. The following description is merely illustrative and is not intended to limit the invention.

As shown in FIGS. 1-4, a fingerprint module 100 according to an embodiment of the present invention may include a fingerprint recognition component, a decorative part 2, a circuit board component 3, a conductive element 4, and a cover plate 5.

In some embodiments, as shown in FIGS. 3 and 4, the fingerprint recognition component may include an encapsulation layer 1, and a first mating portion may be disposed on a rear wall face of the encapsulation layer 1, and the first mating portion may be a protruding portion 11 formed on the rear wall face of the encapsulation layer 1, and the number of the protruding portion 11 may be one and located in the middle part of encapsulation layer 1. When the protruding portion 11 may be processed, a step can be processed in the circumferential direction of the encapsulating layer 1, and the encapsulating layer 1 and the rear wall face and the side wall face of the protruding portion 11 form a first stepped face. As shown in FIGS. 2 and 4, the decorative part 2 may have an embedding groove 21, and the encapsulation layer 1 may be disposed in the embedding groove 21. A second mating portion may be formed in the embedding groove 21, and the second mating portion may be a recess portion 22 formed in the embedding groove 21, and the protruding portion 11 may be located in the recess portion 22. The bottom wall of the embedding groove 21 and the side wall of the recess portion 22 may form a second stepped face, and the first stepped face may be engaged with the second stepped face. When the decorative part 2 and the encapsulation layer 1 are assembled, the thickness of the decorative part 2 and the encapsulation layer 1 in the front-rear direction can be reduced, thereby reducing the thickness of the fingerprint module 100 may be able to adapt to the ultra-thin requirements of the mobile terminal.

It should be noted that when the thickness of the protruding portion 11 in the front-rear direction is a, the thickness of the decorative part 2 after being assembled with the encapsulating layer 1 can be reduced by a. For example, when the thickness of the protruding portion 11 in the front-rear direction is 0.2 mm, the thickness of the decorative part 2 after being assembled with the encapsulating layer 1 can be reduced by 0.2 mm in the front-rear direction.

As shown in FIGS. 2-4, the circuit board component 3 includes a flexible circuit board 31 and a reinforcing plate 32. The bottom wall of the recess portion 22 of the decorative part 2 may be provided with a through hole 23. An end of the flexible circuit board 31 may pass through the through hole 23 and extend into the recess portion 22. The flexible circuit board 31 extended into the recess portion 22 may be attached to the free end face of the protruding portion 11 (i.e. the rear wall face of the protruding portion 11). On one hand, the encapsulation layer 1 can protect the flexible circuit board 31, prevent the impurities in the air from corroding the flexible circuit board 31 to cause electrical performance degradation, and on the other hand, the tight connection between the fingerprint recognition component in the encapsulation layer 1 and the flexible circuit board 31 can be ensured, and the reliability of the operation of the fingerprint module 100 is ensured. The reinforcing plate 32 may be a reinforcing steel plate, and the reinforcing plate 32 may be attached to the side of the flexible circuit board 31 away from the encapsulation layer 1 and electrically connected to the flexible circuit board 31, that is, the reinforcing plate 32 may be attached to the rear side wall of the flexible circuit board 31. The reinforcing plate 32 can strengthen the structural strength of the flexible circuit board 31 and prevent the flexible circuit board 31 from being bent and damaged.

In addition, as shown in FIGS. 2-4, the decorative part 2 may be a conductive metal piece, and the other end of the flexible circuit board 31 (the end that does not extend into the recess portion 22) may be provided with a ground terminal. The conductive element 4 is disposed between the reinforcing plate 32 and the bottom wall of the recess portion 22. The decorative part 2 is electrically connected to the grounding terminal through the conductive element 4, the reinforcing plate 32 and the flexible circuit board 31. Therefore, the purpose of grounding the decorative part 2 may be achieved, and the static electricity of the decorative part 2 may be prevented from adversely affecting the fingerprint module 100. The conductive element 4 is a conductive foam, and the cross section of the conductive foam is rectangular. The bottom wall of the recess portion 22 is provided with a mounting slot 24 having a rectangular cross section, and the conductive foam is embedded in the mounting slot 24. Therefore, the conductive foam can be prevented from moving, thereby ensuring the reliability of the electrical connection between the decorative part 2 and the flexible circuit board 31.

As shown in FIG. 4, the cover plate 5 may be a glass cover plate which is disposed in the embedding groove 21 and located on the front side of the encapsulation layer 1, and the cover plate 5 can block the front side opening of the embedding groove 21. The cover plate 5 not only further protects the circuit board component 3, but also increases the aesthetics of the fingerprint module 100.

As shown in FIG. 4, the outer peripheral wall of the decorative part 2 may be sleeved with the sealing member 7 embedded in the sealing groove 25 on the outer peripheral wall of the decorative part 2. When the fingerprint module 100 may be mounted on a mobile terminal such as a mobile phone, it could prevent the sweat or other liquid on the hand from intruding into the interior of the mobile terminal and damaging the components inside the mobile terminal, thereby ensuring the reliability of the operation of the mobile terminal.

As shown in FIGS. 2-4, the fingerprint module 100 may further include a fingerprint pressing plate 6, and the fingerprint pressing plate 6 may be disposed on the rear side of the decorative part 2.

In the process of manufacturing the fingerprint module 100, the cover plate 5, the encapsulation layer 1, the flexible circuit board 31 and the reinforcing plate 32 may be processed together, and then the conductive foam may be pasted into the mounting slot 24 of the decorative part 2. The cover plate 5, the encapsulation layer 1, the flexible circuit board 31 and the reinforcing plate 32 which are processed together may be assembled together by the surrounding dispensing glue and assembled with the decorative part 2 then held in pressure. At the same time, through the dispensing assembly, after the glue is pressed for a certain period of time, the glue is solidified to ensure good grounding between the reinforcing plate 32 and the decorative part 2 through the certain amount of compression of the conductive foam between the reinforcing plate 32 and the decorative part 2.

The mobile terminal according to an embodiment of the invention may include the above fingerprint module 100.

The mobile terminal according to an embodiment of the invention could achieve the purpose of grounding the decorative part 2 by extending the end of the circuit board component 3, disposing the ground terminal on the circuit board component 3, and interposing the conductive element 4 between the end of the circuit board component 3 and the bottom wall of the embedding groove 21 to electrically connect the decorative part 2 to the ground terminal through the circuit board component 3. Therefore, the static electricity could be avoided to avoid the bad influence on the fingerprint module 100, the reliability of the operation of the fingerprint module 100 and the mobile terminal could be ensured.

In the description of the present disclosure, "one embodiment", "partial embodiment", "conceptual embodiment", "illustration", "specific illustration" or "partial illustration" and the like as referential expressions represent specific features, structures, materials or characteristics described in the embodiment or the illustration, meaning that they are at least included in one embodiment or illustration of the present invention. In the present specification, these expressions do not always represent the same embodiment or illustration. The specific features, structures, materials or characteristics described may be combined in an appropriate form in any one or a plurality of embodiments or illustrations.

## Claims

1. A fingerprint module (100), comprising
a fingerprint recognition component;
a decorative part (2) defining an embedding groove (21) in a front side of the decorative part (2), wherein the fingerprint recognition component is embedded in the embedding groove (21);
a circuit board component (3), an end part of the circuit board component (3) extending into the embedding groove (21) and being attached to a rear end face of the fingerprint recognition component, wherein a ground terminal is disposed on the circuit board component (3), wherein the circuit board component (3) comprises:
a flexible circuit board (31), wherein the ground terminal is disposed on the flexible circuit board (31); and
a reinforcing plate (32), attached to the flexible circuit board (31) and electrically connected to the flexible circuit board (31), wherein the reinforcing plate (32) is located at a side of the flexible circuit board (31) away from the fingerprint recognition component; and
a conductive element (4), sandwiched between the reinforcing plate (32) and a bottom wall of the decorative part (2) in the embedding groove (21) and electrically connected to the reinforcing plate (32) to electrically connect the decorative part (2) to the ground terminal through the circuit board component (3);
wherein the bottom wall of the decorative part (2) defines a mounting slot (24), and the conductive element (4) is embedded in the mounting slot (24);
wherein the conductive element (4) is a conductive foam, the conductive foam has a certain amount of compression, a cross section of the conductive foam is rectangular, the mounting slot (24) has a rectangular cross section, and the conductive foam is embedded in the mounting slot (24).

2. The fingerprint module (100) of claim 1, wherein an end of the flexible circuit board (31) extends into the embedding groove (21) and is attached to the rear end face of the fingerprint recognition component.

3. The fingerprint module (100) of claim 2, wherein a through hole (23) is defined in the bottom wall of the embedding groove (21), and the end of the flexible circuit board (31) passes through the through hole (23) and extends into the embedding groove (21).

4. The fingerprint module (100) of claim 1, wherein the reinforcing plate (32) is a conductive component.

5. The fingerprint module (100) of any one of claims 1 to 4, wherein a sealing member (7) is sleeved on an outer peripheral wall of the decorative part (2).

6. The fingerprint module (100) of claim 5, wherein a sealing groove (25) is defined in the outer peripheral wall of the decorative part (2), and the sealing member (7) is embedded in the sealing groove (25).

7. The fingerprint module (100) of any one of claims 1 to 6, further comprising a cover plate (5) embedded in embedding groove (21) and located at a front side of the fingerprint recognition component.

8. The fingerprint module (100) of any one of claims 1 to 7, wherein the decorative part (2) is a conductive decorative part.

9. The fingerprint module (100) of any one of claims 1 to 8, wherein the embedding groove (21) has a cross section of long circle, a cross section of the circuit board component (3) is a long circle the same as that of the embedding groove (21).

10. The fingerprint module (100) of claim 3, further comprising a fingerprint pressing plate (6) arranged in a rear side of the decorative part (2).

11. The fingerprint module (100) of claim 10, wherein a front side of the fingerprint pressing plate (6) defines an embedding slot, the decorative part (2) is embedded in the embedding slot.

12. The fingerprint module (100) of claim 11, wherein a bottom wall of the embedding slot defines a via corresponding to the through hole (23), the end of the flexible circuit board (31) passes through the via and extends into the embedding groove (21).

13. A mobile terminal, **characterized by** comprising the fingerprint module (100) of any one of claims 1 to 12.

## Patentansprüche

1. Fingerabdruckmodul (100), Folgendes umfassend:
eine Fingerabdruckerkennungskomponente;
einen dekorativen Teil (2), der eine Einbettungsnut (21) auf der Vorderseite des dekorativen Teils (2) definiert, wobei die Fingerabdruckerkennungskomponente in der Einbettungsnut (21) eingebettet ist;
eine Leiterplattenkomponente (3), wobei sich ein Endteil der Leiterplattenkomponente (3) in die Einbettungsnut (21) erstreckt und an einer Rückseitenfläche der Fingerabdruckerkennungskomponente befestigt ist, wobei eine Erdungsklemme an der Leiterplattenkomponente (3) angeordnet ist, wobei die Leiterplattenkomponente (3) Folgendes umfasst:
eine flexible Leiterplatte (31), wobei die Erdungsklemme auf der flexiblen Leiterplatte (31) angeordnet ist; und
eine Verstärkungsplatte (32), die an der flexiblen Leiterplatte (31) befestigt und mit der flexiblen Leiterplatte (31) elektrisch verbunden ist, wobei die Verstärkungsplatte (32) auf einer Seite der flexiblen Leiterplatte (31) angeordnet ist, die von der Fingerabdruckerkennungskomponente abgewandt ist; und ein leitfähiges Element (4), das zwischen der Verstärkungsplatte (32) und einer Bodenwand des dekorativen Teils (2) in der Einbettungsnut (21) angeordnet und mit der Verstärkungsplatte (32) elektrisch verbunden ist, um den dekorativen Teil (2) durch die Leiterplattenkomponente (3) elektrisch mit der Erdungsklemme zu verbinden;
wobei die Bodenwand des dekorativen Teils (2) einen Montageschlitz (24) definiert und das leitfähige Element (4) in den Montageschlitz (24) eingebettet ist;
wobei das leitfähige Element (4) ein leitfähiger Schaum ist, wobei der leitfähige Schaum einen bestimmten Verdichtungsgrad aufweist, wobei der Querschnitt des leitfähigen Schaums rechteckig ist, wobei der Montageschlitz (24) einen rechteckigen Querschnitt aufweist und der leitfähige Schaum in den Montageschlitz (24) eingebettet ist.

2. Fingerabdruckmodul (100) nach Anspruch 1, wobei sich ein Ende der flexiblen Leiterplatte (31) in die Einbettungsnut (21) erstreckt und an der Rückseitenfläche der Fingerabdruckerkennungskomponente befestigt ist.

3. Fingerabdruckmodul (100) nach Anspruch 2, wobei eine Durchgangsbohrung (23) in der Bodenwand der Einbettungsnut (21) definiert ist und das Ende der flexiblen Leiterplatte (31) durch die Durchgangsbohrung (23) verläuft und sich in die Einbettungsnut (21) erstreckt.

4. Fingerabdruckmodul (100) nach Anspruch 1, wobei die Verstärkungsplatte (32) eine leitfähige Komponente ist.

5. Fingerabdruckmodul (100) nach einem der Ansprüche 1 bis 4, wobei ein Dichtungselement (7) eine Außenumfangswand des dekorativen Teils (2) ummantelt.

6. Fingerabdruckmodul (100) nach Anspruch 5, wobei eine Dichtungsnut (25) in der Außenumfangswand des dekorativen Teils (2) definiert ist und das Dichtungselement (7) in die Dichtungsnut (25) eingebettet ist.

7. Fingerabdruckmodul (100) nach einem der Ansprüche 1 bis 6, ferner umfassend eine Abdeckplatte (5), die in die Einbettungsnut (21) eingebettet ist und auf einer Vorderseite der Fingerabdruckerkennungskomponente angeordnet ist.

8. Fingerabdruckmodul (100) nach einem der Ansprüche 1 bis 7, wobei der dekorative Teil (2) ein leitfähiger dekorativer Teil ist.

9. Fingerabdruckmodul (100) nach einem der Ansprüche 1 bis 8, wobei die Einbettungsnut (21) einen Querschnitt eines länglichen Kreises aufweist, wobei der Querschnitt der Leiterplattenkomponente (3) ein länglicher Kreis ist, der dem Querschnitt der Einbettungsnut (21) gleicht.

10. Fingerabdruckmodul (100) nach Anspruch 3, ferner umfassend eine Fingerabdruckdruckplatte (6), die in einer Rückseite des dekorativen Teils (2) angeordnet ist.

11. Fingerabdruckmodul (100) nach Anspruch 10, wobei die Vorderseite der Fingerabdruckdruckplatte (6) einen Einbettungsschlitz definiert, wobei der dekorative Teil (2) in den Einbettungsschlitz eingebettet ist.

12. Fingerabdruckmodul (100) nach Anspruch 11, wobei die Bodenwand des Einbettungsschlitzes eine zur Durchgangsbohrung (23) passende Durchkontaktierung definiert, wobei das Ende der flexiblen Leiterplatte (31) durch die Durchkontaktierung verläuft und sich in die Einbettungsnut (21) erstreckt.

13. Mobiles Endgerät, **dadurch gekennzeichnet, dass** es das Fingerabdruckmodul (100) nach einem der Ansprüche 1 bis 12 umfasst.

## Revendications

1. Module d'empreinte digitale (100) comprenant :
un composant de reconnaissance d'empreinte digitale ;
une partie décorative (2) définissant une rainure d'encastrement (21) dans un côté avant de la partie décorative (2), le composant de reconnaissance d'empreinte digitale étant encastré dans la rainure d'encastrement (21) ;
un composant de carte de circuit imprimé (3), une partie d'extrémité du composant de carte de circuit imprimé (3) s'étendant dans la rainure d'encastrement (21) et étant fixée à une face d'extrémité arrière du composant de reconnaissance d'empreinte digitale, une borne de mise à la terre étant disposée sur le composant de carte de circuit imprimé (3), le composant de carte de circuit imprimé (3) comprenant :
une carte de circuit imprimé souple (31), la borne de mise à la terre étant disposée sur la carte de circuit souple (31) ; et
une plaque de renforcement (32), fixée à la carte de circuit imprimé souple (31) et connectée électriquement à la carte de circuit imprimé souple (31), la plaque de renforcement (32) étant située au niveau d'un côté de la carte de circuit imprimé souple (31) à l'opposé du composant de reconnaissance d'empreinte digitale ; et
un élément conducteur (4), pris en sandwich entre la plaque de renforcement (32) et une paroi inférieure de la partie décorative (2) dans la rainure d'encastrement (21) et connecté électriquement à la plaque de renforcement (32) pour connecter électriquement la partie décorative (2) à la borne de mise à la terre par l'intermédiaire du composant de carte de circuit imprimé (3) ;
la paroi inférieure de la partie décorative (2) définissant une fente de montage (24), et l'élément conducteur (4) étant encastré dans la fente de montage (24) ;
l'élément conducteur (4) étant une mousse conductrice, la mousse conductrice ayant un certain degré de compression, une section transversale de la mousse conductrice étant rectangulaire, la fente de montage (24) ayant une section transversale rectangulaire, et la mousse conductrice étant encastrée dans la fente de montage (24).

2. Module d'empreinte digitale (100) selon la revendication 1, une extrémité de la carte de circuit imprimé souple (31) s'étendant dans la rainure d'encastrement (21) et étant fixée à la face d'extrémité arrière du composant de reconnaissance d'empreinte digitale.

3. Module d'empreinte digitale (100) selon la revendication 2, un trou traversant (23) étant défini dans la paroi inférieure de la rainure d'encastrement (21), et l'extrémité de la carte de circuit imprimé souple (31) passant à travers le trou traversant (23) et s'étendant dans la rainure d'encastrement (21).

4. Module d'empreinte digitale (100) selon la revendication 1, la plaque de renforcement (32) étant un composant conducteur.

5. Module d'empreinte digitale (100) selon l'une quelconque des revendications 1 à 4, un élément d'étanchéité (7) étant emmanché sur une paroi périphérique extérieure de la partie décorative (2).

6. Module d'empreinte digitale (100) selon la revendication 5, une rainure d'étanchéité (25) étant définie dans la paroi périphérique extérieure de la partie décorative (2), et l'élément d'étanchéité (7) étant encastré dans la rainure d'étanchéité (25).

7. Module d'empreinte digitale (100) selon l'une quelconque des revendications 1 à 6, comprenant en outre une plaque de recouvrement (5) encastrée dans la rainure d'encastrement (21) et située au niveau d'un côté avant du composant de reconnaissance d'empreinte digitale.

8. Module d'empreinte digitale (100) selon l'une quelconque des revendications 1 à 7, la partie décorative (2) étant une partie décorative conductrice.

9. Module d'empreinte digitale (100) selon l'une quelconque des revendications 1 à 8, la rainure d'encastrement (21) ayant une section transversale de cercle long, une section transversale du composant de carte de circuit imprimé (3) étant un cercle long identique à celui de la rainure d'encastrement (21).

10. Module d'empreinte digitale (100) selon la revendication 3, comprenant en outre une plaque de pression d'empreinte digitale (6) disposée dans un côté arrière de la partie décorative (2).

11. Module d'empreinte digitale (100) selon la revendication 10, un côté avant de la plaque de pression d'empreinte digitale (6) définissant une fente d'encastrement, la partie décorative (2) étant encastrée dans la fente d'encastrement.

12. Module d'empreinte digitale (100) selon la revendication 11, une paroi inférieure de la fente d'encastrement définissant un trou d'interconnexion correspondant au trou traversant (23), l'extrémité de la carte de circuit imprimé souple (31) passant à travers le trou d'interconnexion et s'étendant dans la rainure d'encastrement (21).

13. Terminal mobile, **caractérisé en ce qu'**il comprend le module d'empreinte digitale (100) selon l'une quelconque des revendications 1 à 12.
